# EUROPEAN PATENT SPECIFICATION

(11) **EP 3 052 749 B1**
(45) Date of publication and mention of the grant of the patent: **01.05.2019**
(21) Application number: 14861636.0
(22) Date of filing: 03.10.2014
(51) Int. Cl.: E21B 33/13, E21B 43/26, E21B 21/06

(54) **METHOD OF PROVIDING A BOREHOLE FLUID COMPRISING SUSPENDED SOLID OBJECTS**
METHODE ZUR BEREITSTELLUNG EINER BOHRLOCHFLÜSSIGKEIT, DIE SUSPENDIERTE FESTE OBJEKTE ENTHÄLT
PROCÉDÉ POUR LA PROVISION D'UN FLUIDE DE PUITS COMPRENANT DES OBJETS SOLIDES SUSPENDUS

(30) Priority: 04.10.2013 GB 201317626
(43) Date of publication of application: 10.08.2016
(73) Proprietor: Services Pétroliers Schlumberger, 75007 Paris (FR); Schlumberger Technology B.V., 2514 JG The Hague (NL)
(72) Inventor: SNOSWELL, David Robert Evan, Cambridge Cambridgeshire CB3 0EL (GB); WAY, Paul, Cambridge Cambridgeshire CB3 0EL (GB); COOK, John, Cambridge Cambridgeshire CB3 0EL (GB); BAILEY, Louise, Cambridge Cambridgeshire CB3 0EL (GB); TUNC, Gokturk, Katy, Texas TX 77493 (US); JAMIE, Elizabeth Alice Gilchrist, Cambridge Cambridgeshire CB3 0EL (GB); ALDRED, Walter, Cambridge Cambridgeshire CB3 0EL (GB)
(74) Representative: Schlumberger Intellectual Property Department
(86) International application number: PCT/IB2014/065049
(87) International publication number: WO 2015/071787

(56) References cited:
- WO-A1-2011/163529
- WO-A1-2013/010108
- US-A- 3 417 821
- US-A- 3 496 902
- US-A- 6 059 034
- US-A1- 2004 238 218
- US-A1- 2005 194 141
- US-A1- 2008 028 891
- US-A1- 2010 204 070
- US-A1- 2013 130 947
- US-A1- 2013 130 947
- US-B1- 6 528 157
- US-B2- 7 297 662

## Description

### BACKGROUND

A considerable range of fluids are used in the creation and operation of subterranean boreholes. These fluids may contain suspended solids for a number of purposes. Included within this broad category are drilling fluids which may contain suspended solids to block fractures in formation rock and mitigate so-called lost circulation.

Lost circulation, which is the loss of drilling fluid into downhole earth formations, can occur naturally in formations that are fractured, porous, or highly permeable. Lost circulation may also result from induced pressure during drilling. Lost circulation may also be the result of drilling-induced fractures. For example, when the pore pressure (the pressure in the formation pore space provided by the formation fluids) exceeds the pressure in the open wellbore, the formation fluids tend to flow from the formation into the open wellbore. Therefore, the pressure in the open wellbore is typically maintained at a higher pressure than the pore pressure. However, if the hydrostatic pressure exerted by the fluid in the wellbore exceeds the fracture resistance of the formation, the formation is likely to fracture and thus drilling fluid losses may occur. Moreover, the loss of wellbore fluid may cause the hydrostatic pressure in the wellbore to decrease, which may in turn also allow formation fluids to enter the wellbore. The formation fracture pressure typically defines an upper limit for allowable wellbore pressure in an open wellbore while the pore pressure defines a lower limit. Therefore, a major constraint on well design and selection of drilling fluids is the balance between varying pore pressures and formation fracture pressures or fracture gradients though the depth of the well.

A similar problem can arise when cementing. Pressure to push cement into place in an annulus around casing can create fractures in the surrounding formation into which cement is lost.

Several remedies aiming to mitigate lost circulation are available. These include the addition of particulate solids to drilling fluids, so that the particles can enter the opening into a fracture and plug the fracture or bridge the opening to seal the fracture. Documents which discuss such "lost circulation materials" include US patent 8401795, US patent 3417821 and Society of Petroleum Engineers papers SPE 58793, SPE 153154 and SPE 164748. US patent 3417821 discloses adding particulate solids comprising a fluid loss control additive with disk-like elastic members.

### SUMMARY

This summary is provided to describe a method that solves or at least improves the abovementioned disadvantages of the prior art.

As now disclosed herein, a method of providing a borehole fluid containing suspended solid objects is provided, comprising suspending the objects in a borehole fluid and delivering the borehole fluid into a borehole, characterized by making the solid objects by an additive manufacturing process in the form of a 3D-printing process, comprising using a movable printing head to deliver droplets of a liquid composition to an array of locations in a workspace referred to as voxels, in accordance with a digital design of the solid objects, and solidifying the composition as it is delivered, in which the liquid composition is photopolymerisable and polymerisation of the composition is initiated by illumination of the workspace with ultra-violet or visible light while the printing head delivers the droplets of the liquid composition to the voxels, wherein a number of the solid objects are made concurrently.

An additive manufacturing process may be implemented to construct an object in accordance with a design held in digital form. The process progressively creates an object by adding material at selected locations within a workspace, so that the added material joins on to material already present at one or more adjacent locations. Such a process is termed "additive" because more material is progressively added in order to arrive at the finished article, in contrast with traditional machining processes which remove material from a workpiece in order to create the desired shape. Several additive processes are known and are sometimes referred to as three-dimensional printing (3D-printing) although that term may also be reserved for one or only some of these additive manufacturing processes.

The term "3D printing" may be used for a process which uses a movable printing head to deliver a droplet of a polymerisable liquid composition to each selected location. The composition may for instance be photopolymerisable by ultraviolet or visible light, and the polymerisation is initiated by illuminating the work space with ultra-violet or visible light while the print head delivers droplets of composition to the selected locations. The photopolymerisation joins each droplet onto material which has already been delivered and polymerised. A process of this kind and apparatus for the purpose was described in US5287435 although there have been numerous subsequent developments as for instance disclosed in US6658314 and US7766641.

The array of locations in a workspace are sometimes referred to as voxels. Additive manufacturing processes may create the intended object in a succession of layers, adding material at selected locations in each layer and then moving on to the next layer. Each layer in a succession of layers may be considered as an array of uniformly sized voxels with the photopolymerisable material delivered to selected voxels in each layer. As polymerisable material which will eventually form the finished object is delivered to the selected locations (i.e. selected voxels) another material which acts as a temporary support may be delivered to the remaining voxels as described in US6658314. This support material is subsequently removed after all the layers have been completed.

Some 3D-printing machines have the capability to deliver more than one polymerisable material at selected locations as disclosed in US66584314 as well as a temporary support material at other locations thus enabling an object to be made from two materials. The materials may also be mixed together, for instance by delivering them to alternate voxels in a sequence of adjoining voxels.

In another arrangement, the material delivered to the selected locations, which will eventually form the finished object, is provided as a filament which is heated and delivered in molten form so that it adheres to previously delivered material as it cools. A system of this kind is disclosed in US7384255 and references cited therein.

3D-printing can also be carried out with other materials. For metals it can be done using metal powder as the raw material and a laser beam to sinter the powder deposited at selected locations or using metal wire as the raw material and an electron beam to bring about melting at selected locations.

Other forms of additive manufacturing begin each layer by providing a layer of a powder and join the powder particles into a larger solid form at selected locations in each layer. This may be done by depositing a binder material at each selected location as in US60073128 or by heating with a laser to sinter the material at the selected locations as in US8299208. Selective laser melting is a process for making metal objects. The metal is supplied as layers of fine metal powder, and melted with a laser beam at selected locations.

Another additive process is stereolithography in which a volume of polymerisable liquid is selectively polymerised at selected locations by irradiating with a laser as described in US5778567.

3D printing and other additive manufacturing processes are commonly regarded as appropriate when the number of articles to be produced is small. A 3D printer may be used to make a prototype article in a workspace which is not large enough to contain more one such article, so that the machine can only be used to make one article at a time. Additive manufacturing processes have thus been regarded as techniques for rapid prototyping.

By contrast, what is contemplated by the present disclosure is using an additive manufacturing process to make objects in large quantities. The objects may be small in relation to the workspace of the machine, so that a number of the objects can be made concurrently. One benefit of using an additive manufacturing process is that it is possible to make objects with shapes and/or properties that cannot be achieved easily, or even at all, by using particulate solids from natural sources or making objects by other manufacturing processes.

The objects which are suspended in a wellbore fluid, as disclosed herein, may serve various purposes. One possibility is that the objects are used to prevent or mitigate loss of the drilling fluid into fractures in the subterranean rock formation as the borehole is drilled. If a fracture is created in a formation during drilling or if a natural fracture is encountered, the fluid entering the fracture can carry some of the objects into the fracture, for them to block the fracture and reduce further leakage. So, in a further aspect, the present disclosure provides a method of inhibiting loss of wellbore fluid into apertures in formation bounding the wellbore, comprising making solid objects by an additive manufacturing process and suspending the objects in the wellbore fluid to obstruct flow into the apertures.

The wellbore fluid in which objects are suspended may contain other suspended solids and may be a drilling fluid or a cement or a fluid used for pre-treatment of a borehole prior to cementing.

The fluid may possibly contain objects made by an additive manufacturing process together with another lost circulation material of known type, such as graphite particles. This other lost circulation material may have a mean particle size of at least 0.3mm and possibly a mean particle size in a range from 0.3 to 1.0 mm. The objects made by additive manufacturing may be used in an amount which is less, by weight and or by volume, than the amount of other lost circulation material(s). For instance the solids incorporated in a drilling fluid to mitigate lost circulation may comprise (i) objects made by additive manufacturing and having dimensions too large to fit within a 1mm diameter sphere and (ii) other particulate solid particles having a mean particle size of in a range from 0.3 to 1.0mm with a volume ratio of (i):(ii) in a range from 1:200 to 1:5 possibly from 1:200 to 1:10.

Objects made by an additive manufacturing process and suspended in a wellbore fluid, as disclosed herein, may all be manufactured with identical shape and size, or may be a mixture of a small number of shapes and sizes. For example a mixture of up to six kinds, where there are thousands of (i.e. more than a thousand) identical particles of each individual kind. By contrast, another lost circulation material of natural origin, such as graphite particles, will be a random distribution of shapes and sizes.

In another aspect, the present disclosure teaches a method of inhibiting loss of borehole fluid into apertures in formation bounding the borehole, comprising making solid objects by an additive manufacturing process and suspending the objects in the borehole fluid to obstruct flow into the apertures.

In some embodiments, the objects may be as defined above.

In some preferred embodiments, at least some of the objects may comprise a flexible outer material enclosing a deformable core, capable of curing to a more rigid state and the method includes pumping the fluid down a conduit, delivering the borehole fluid into the borehole from the conduit and curing the cores of the particles to the more rigid state after delivery into the borehole from the conduit.

### BRIEF DESCRIPTION OF THE DRAWINGS

Fig 1 diagrammatically illustrates a drill string in a borehole;
Fig 2 shows an end view of one example of a drill bit;
Figs 3 to 7 show a number of objects made by three-dimensional printing;
Fig 8 is a cross section through an object made by three-dimensional printing;
Fig 9 shows the bottom portion of a drill string in a borehole.

### DETAILED DESCRIPTION

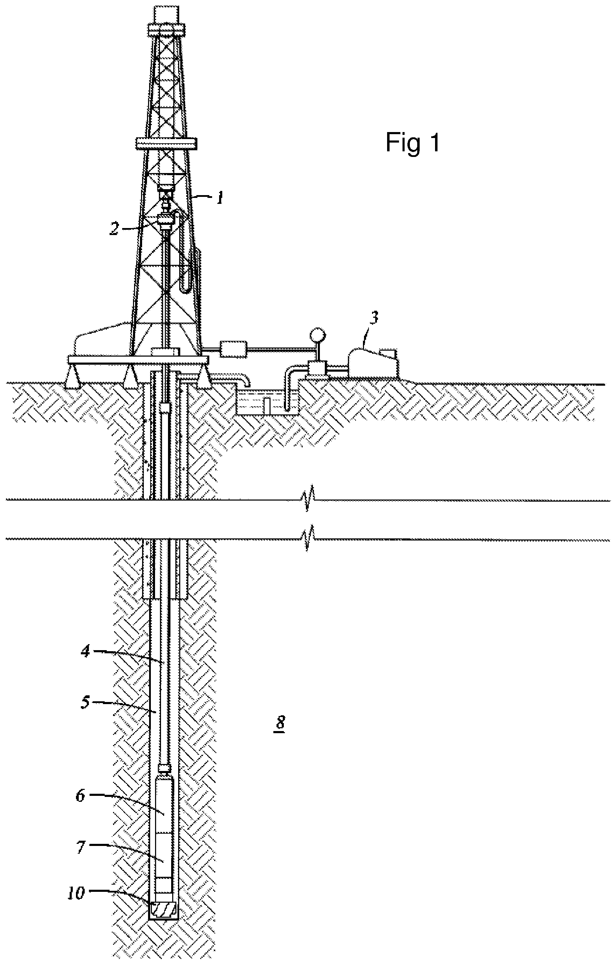

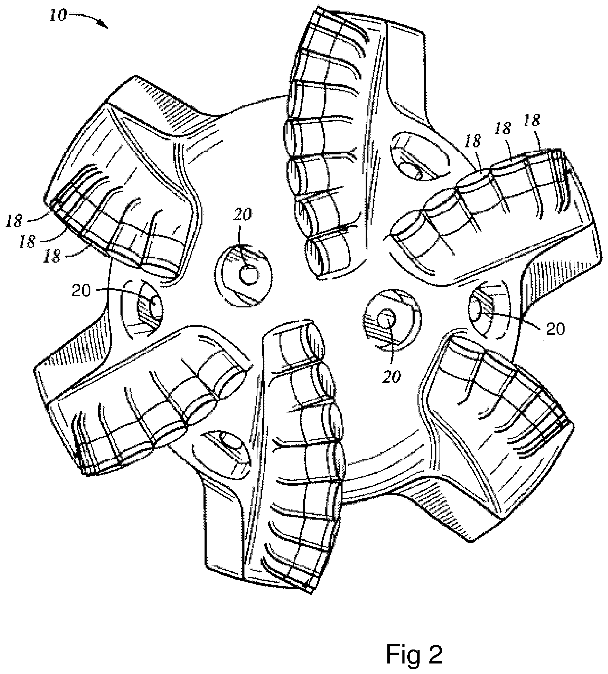

Fig. 1 shows the drilling of a borehole through rock formations 8. The drill bit 10 is coupled to the lower end of a drill string 4, which typically includes segments of drill pipe (not shown separately) coupled together. The drill bit 10 is coupled to the drill string 4 through a bottom hole assembly 6 and 7. The drill string 4 may be rotated by a rotary table (not shown in Fig. 1) or a top drive system 2 which is itself hoisted and lowered by a drilling rig 1. As shown by Fig 2 the drill bit has a body supporting cutters 18. Drilling fluid ("drilling mud") is circulated through the drill string 4 by mud pumps 3. The drilling mud is pumped down the interior of the drill string 4 and through the bottom hole assembly to passages through the drill bit 10. These passages through the body of the drill bit terminate at jets 20 shown by Fig 2 After being discharged through the jets 20, the drilling mud returns to the earth's surface through an annular space 5 around the exterior of the drill string 4 in the borehole.

The circulating drilling fluid provides hydrostatic pressure to prevent the ingress of formation fluids into the borehole, cools and lubricate the drill string and bit and removes drill cuttings from the bottom of the hole to the surface. Drilling fluid compositions may be water- or oil-based and may include weighting agents, surfactants, polymeric thickeners and other materials.

If there is a fracture in the formation rock penetrated by the borehole, drilling fluid may leak into this fracture and be lost. In accordance with the present disclosure, objects made by an additive process as disclosed here may be suspended in drilling fluid as an expedient to block any such fractures and mitigate fluid loss. The objects may themselves block the fracture or they may act jointly with other solids in the fluid to form a plug which closes the fracture.

These objects made by an additive process may comprise an organic, i.e. carbon-based polymer. After printing, the material may be a thermoplastic polymer or a thermoset polymer and may incorporate filler as well as polymer. Specific gravity may range up to 2.5 or 3.0, especially if the composition includes a filler as well as polymer. In some embodiments the material from which the objects are made may have a specific gravity in a range from 0.7 to 1.3 and possibly in a narrower range from 0.8 to 1.0 or 1.2. It is also possible that the polymer is a polysiloxane which has a polymer chain of silicon and oxygen atoms. Polysiloxanes may have a specific gravity in a ranger from 0.9 or 1.0 up to 1.2 or 1.3. Such a specific gravity may be similar to the specific gravity of a wellbore fluid, so that the objects will be less prone to rapid settling out from such a fluid than particles of inorganic mineral of higher specific gravity but similar size. Settling out of particles can be problematic especially if the circulation of fluid is interrupted. In consequence, the objects according to this disclosure may be larger than would be acceptable for particles of higher specific gravity and by reason of larger size they may be suitable for blocking larger fractures.

It is possible that a polymer may be less dense than a borehole fluid. In some embodiments, to mitigate any problems caused by buoyancy of objects, the polymer may be mixed with a denser filler to raise its specific gravity towards neutral buoyancy in the borehole fluid.

In some embodiments objects are made from material of higher specific gravity. For instance, objects with an open cage structure may be made from a metal to give strength, whilst the open cage structure leads to overall lightness relative to size.

Solid objects of polymeric material may have a size chosen to be the maximum which can pass through the jets 20 of the drill bit which is in use. Alternatively, they may be smaller than this constraint. The objects may have dimensions such that they could fit inside a sphere of 10mm diameter and possibly inside a sphere of 8, 6 or even 5mm diameter. Such objects may be sufficiently large that they could not fit within a sphere of 1 mm diameter and possibly not within a sphere of 1.5 or 2mm diameter.

In a 3-D printing process which relies on photopolymerisation after delivery of droplets to the required locations (voxels), the formulation which is delivered may contain a variety of materials with reactive groups, such as epoxy groups, acrylate groups and vinyl ether and other reactive olefinic groups, as for instance disclosed in US7183335. The polymerisable formulation may comprise oligomers which incorporate reactive groups able to undergo further polymerisation so as to lengthen polymer chains or able to form cross links between chains. Polymerisation may be free radical polymerisation initiated by means of an initiator compound which is included in the formulation and which is decomposed to liberate free radicals by ultraviolet or visible light.

The objects may have a shape which is different from that of a particulate solid obtained from naturally occurring material. The objects may be shaped to assist them in lodging in the fracture by engaging with each other or by engaging with the formation rock. They may themselves block the fracture or they may interact with other solids in the fluid to form a blockage which closes the fracture.

One possibility is that objects will have a shape which is generally smooth, but is not spherical. Examples of such a shape include an ellipsoid and a rod with domed ends.

An object may have at least one edge where two surfaces intersect. Another possibility is that objects will have corners or points which will enhance ability to engage with a rock surface or with each other compared with particles with a smooth surface. A corner where three surfaces and three edges meet may be such that the angle included between surfaces at the corner in each of two planes intersecting at right angles is not more than 120° and possibly not more than 100°. Some forms of object may have a corner or a point shaped such that the angle included between surfaces at the corner in each of two planes intersecting at right angles is less than 90°. An alternative parameter for sharpness of a point or corner is that it may be such as to include a solid angle of less than π/2 (i.e. 0.5π) steradians which is the solid angle subtended by a corner of a cube. The solid angle included by a corner or point may possibly lie in a range from 0.25 to 0.45 steradians.

Another possibility is that an object will have a plurality of projections which are spikes or fingers, being sufficiently long and sufficiently close together that the projections of one object can fit between projections of another. This will assist such objects to engage together and form a mass within the mouth of a fracture. An object with these characteristics may have at least 4 and possibly at least 8 projections from a core.

A further possibility is that an object may have a structure enclosing or partially enclosing a hollow interior accessible through apertures. This may comprise a cage structure made up from connected bars.

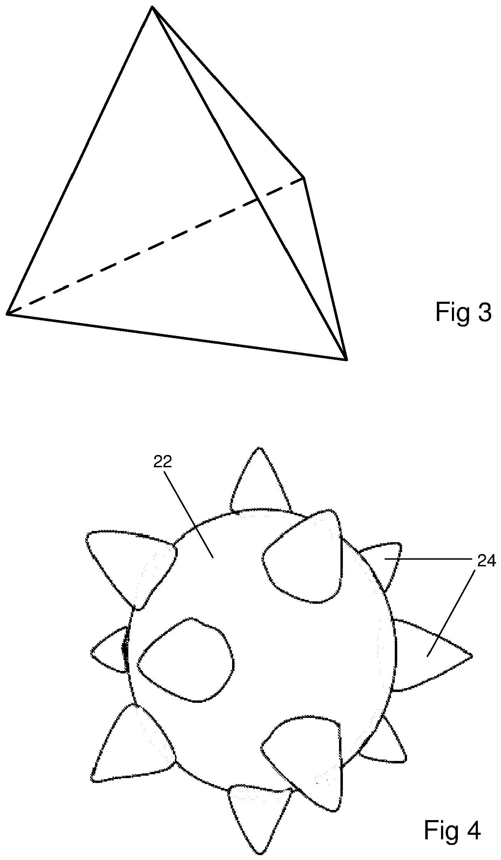

Figs 3 to 8 show a variety of objects which may be made by 3-D printing. Machines for 3D printing are available from several manufacturers, including Stratasys, located in Edina, Minnesota and elsewhere. A commercially available 3D-printing machine may for example print objects within a space slightly larger than a 20cm cube, printing them as layers each of which has a thickness of 16 or 32 microns and a resolution of about 20 points per mm.

The objects shown in Fig 3 and subsequent figures are printed with a photopolymerisable composition. 3D-printing machine manufacturers may supply a number of such compositions which comprise photopolymerisable monomers or oligomers and an initiator which is decomposed to free radicals by ultra-violet or visible light. Such a composition may also contain further materials including finely divided particulate solid filler.

Such a composition is deposited at each required location in each layer while the workspace is illuminated with ultraviolet light which cures the composition. Concurrently, a second material to act as a temporary support is deposited at points in the layer which will eventually become empty space around or within the object. This material solidifies as it is deposited, but has little structural strength and may be removed with a water jet after printing is complete.

As just mentioned, a range of compositions are available. For some embodiments of this invention the composition may comprise polyurethane oligomers with reactive groups attached. One example of such oligomers are polyurethanes with attached acrylate groups. The polyurethanes themselves can be formed from di-isocyanates and polymeric diols. The physical and mechanical properties of the eventual polymers can be regulated by the structures, chain lengths and proportions of the di-isocyanates (which can provide rigidity) and the polymeric diols (which provide flexibility) and the amount of cross-linking between polymer chains.

Fig 3 shows one object made by a 3-D printing process. It is a tetragon, which is a symmetrical triangular pyramid with each face formed by an equilateral triangle so that all faces are equal in shape and size. The angle at each corner of each triangular face is of course 60°. If a corner is viewed in two orthogonal directions, the included angles appear as 60° or less. The solid angle included at each corner of a regular tetragon is less than 0.5π steradians. In one example, these tetragons have a length along each side of 1mm

When carried into a fracture by drilling fluid these tetragons will snag on the rough surface of the rock and will interfere with each other to a greater extent than smooth particles. This assists them in forming a blockage more readily than particles of similar size but with a natural origin and a smoother approximately spheroidal shape. If a fracture opens slightly due to pressure fluctuations, any rolling action of a tetragon along the fracture wall is likely keep the tetragon stationary and jammed if the fracture expansion is less than 20%. The angular shape of a regular tetragon allows it to span two opposite surfaces within a 20% range depending on orientation.

A further possibility (not according to the invention) is to print the tetragons illustrated in Fig 3 using a machine which delivers molten polymer to each required voxel, and use a degradable polymer such as polyhydroxyacetic acid as the polymer. This polymer degrades over time through hydrolysis so that the particles which inhibit lost circulation are not permanent but slowly disappear through hydrolysis. This may be useful when drilling through zones which will eventually produce oil or gas. In particular this may be useful when drilling through a production zone, where any fractures which form are an unwanted potential route for loss of drilling fluid but can be a desirable aid to production when it commences.

Fig 4 shows an object which is a sphere with a number of conical projections. In an example, the spherical core 22 has a diameter of 3mm. There are a plurality of conical projections 24 from the core. In this example the number of projections 24 is more than ten but less than twenty. Each of these projections 24 extends 1mm from the core and has a surface which is inclined at an angle of 30° to the axis of the cone so that the solid angle included within the tip of each projection is less than 0.5π steradians (and is approximately 0.8 steradians). These projections will snag on rock and will enable the objects to engage with each other, thus assisting them in blocking a fracture.

As mentioned above, some 3D-printing machines have the capability to deliver more than one polymerisable material at selected locations. A machine with such capability may be used to print the object of Fig 4 with rubber-like bendable cones on a more rigid core, or rigid cones on a rubber-like core.

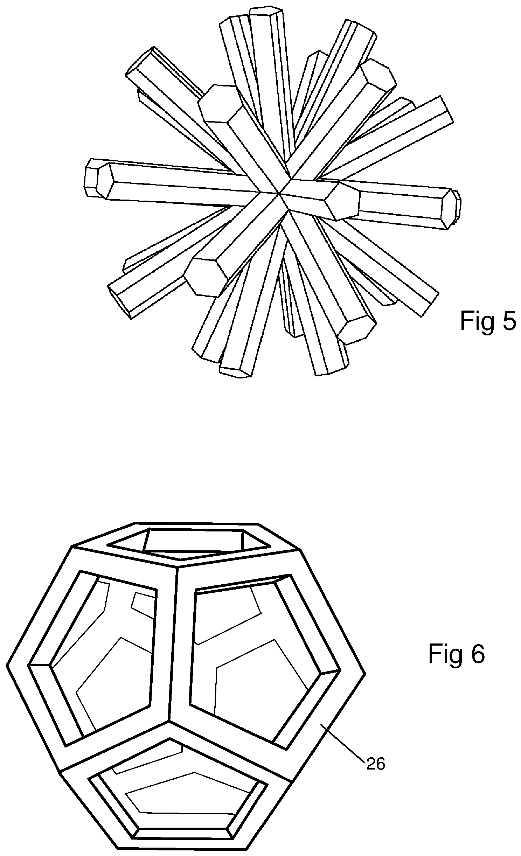

Fig 5 shows an object which has an approximately spherical core which is completely covered by projections which are each a five or six sided prisms. The diameter of the core is less than the length of one of the prisms. In an example the core has a diameter of 0.75mm and the prisms have a length of 1.95mm so that the length of the prisms is more than twice the diameter of the core.

As with the objects of Figs 3 and 4, the projections can snag on rock surfaces which as with the previous objects helps them to start forming a blockage in a fracture. The elongate prisms projecting from one object can fit in between those projecting from another object of the same shape which enables a number of the objects to connect together and form a blockage at the mouth of a fracture.

Fig 6 shows an object which is an open cage with the shape of a dodecahedron. More specifically it comprises bars 26 connected together to form the edges of faces which are pentagons . In an example, this object has a size which would just fit inside a sphere of 5mm diameter. It would be included in drilling fluid and would be able to lodge in a fracture more than 5mm across. Objects such as this would not seal the fracture, but would provide a support against which smaller solid particles could accumulate, forming a seal. Such objects may then be referred to as "primary bridging particles" in a system of particles. By reason of its open structure and the relatively low density of the material from which it is made an object such as shown in Fig 6 would settle under gravity much more slowly than a solid particle of inorganic material having the same particle size and therefore settling out is less likely during periods when the drilling fluid is not circulating in the borehole.

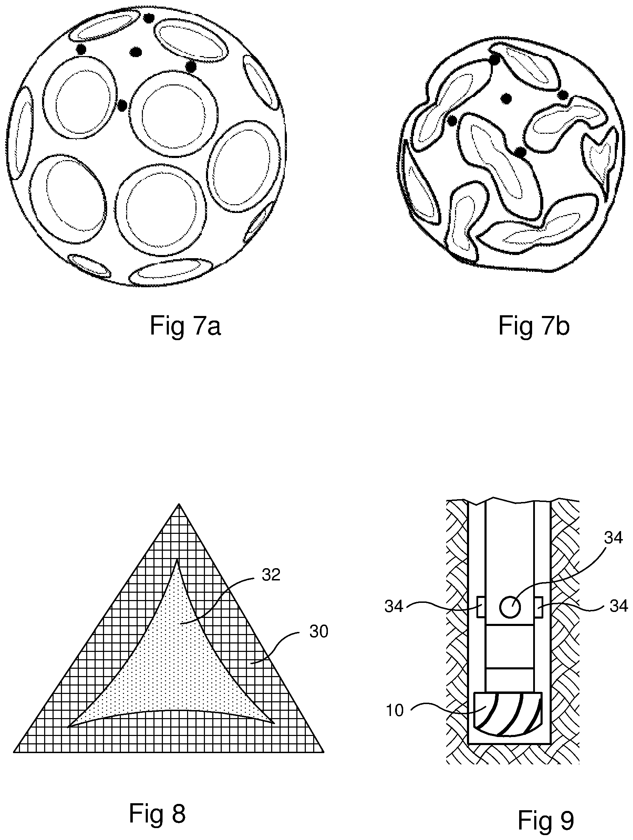

Figs 7a and 7b show an object which can exist in two forms, one larger than the other. The form in Fig 7b is twisted but can untwist and expand to the form shown in Fig 7a.

Figs 8 and 9 illustrate a further possibility. As shown by the cross section which is Fig 8, tetragons are made with an outer material 30 wholly enclosing a core 32 of a second material. Both materials are photocurable, but they contain different photoinitiators and in consequence they are not cured at the same time. The outer material 30 is a polymer which is photocured using ultra-violet light during the 3D printing process. Its composition is such that it is flexible. For example it may be formed from a polyurethane acrylate containing polymeric diol groups which are long enough to provide flexibility. The inner core material is deposited during the printing process but has little or no rigidity. It is a liquid composition which is curable by means of visible radiation. This can penetrate through the outer material 30. The core material 32 can be printed because it is surrounded by the outer material 30 during printing and eventually becomes entirely enclosed by outer material. Thus, as made by the 3D printing process, the objects are tetragons which are flexible because they consist of a flexible shell of outer material 30 enclosing a core 32 of liquid material. The tetragons are added to drilling fluid whilst in this state and their flexibility helps them to travel through the passages and jets 20 of the drill bit 10. If they begin to stick in the passages, their flexibility allows them to deform and be released.

Another possibility (not according to the invention) for making these particles is that the outer material 30 is printed as molten polymer which solidifies to a flexible state after printing, so that no exposure to ultra-violet is required during the 3D printing process.

As diagrammatically indicated by Fig 9, the lower portion of the bottom hole assembly, above the drill bit 10, is provided with lamps 34 providing visible light radiation which is able to pass through the outer material 30 of the tetragons and initiate curing of the core 32 to a rigid state. Thus the tetragons become more rigid after they have passed through the drill bit 10. In order to assist this downhole photocuring, the flow paths downhole may be configured to carry the particles close to a downhole light source. One possibility for this would be to direct the fluid through a hydrocyclone with illuminated walls.

Although Fig 8 shows the objects as tetragons, this approach of an uncured core within a flexible outer material could be applied with other shapes as well.

The use of objects made by an additive process, as exemplified above is not confined to use in drilling fluid. The wellbore fluid may be a cement, or a pretreatment fluid used prior to cementing.

It will be appreciated that the example embodiments described above can be modified and varied within the scope of the concepts which they exemplify. Features referred to above or shown in individual embodiments above may be used together in any combination as well as those which have been shown and described specifically. Accordingly, all such modifications are intended to be included within the scope of this disclosure as defined in the following claims.

## Claims

1. A method of providing a borehole fluid containing suspended solid objects, comprising suspending the objects in a borehole fluid and delivering the borehole fluid into a borehole, **characterized by** making the solid objects by an additive manufacturing process in the form of a 3D-printing process, comprising using a movable printing head to deliver droplets of a liquid composition to an array of locations in a workspace referred to as voxels, in accordance with a digital design of the solid objects, and solidifying the composition as it is delivered, in which the liquid composition is photopolymerisable and polymerisation of the composition is initiated by illumination of the workspace with ultra-violet or visible light while the printing head delivers the droplets of the liquid composition to the voxels, wherein a number of the solid objects are made concurrently.

2. A method according to claim 1 wherein the objects are made of a composition with a specific gravity not exceeding 3.0, preferably the objects are made of a composition with a specific gravity in a range from 0.8 to 1.2.

3. A method according to claim 2 wherein the composition comprises a carbon-based polymer.

4. A method according to claim 1 or any other preceding claim wherein the objects are dimensioned such as to be too large to fit inside a sphere of 1.5mm diameter but small enough to fit inside a sphere with a diameter of 6mm.

5. A method according to claim 1 or any other preceding claim wherein at least some of the objects have a shape which is other than spherical.

6. A method according to claim 1 or any other preceding claim wherein at least some of the objects have a shape such that each object has one or more edges, points or corners, preferably the points or corners include angles which are less than 90° when viewed in two orthogonal directions or which include a solid angle of less than 0.5π steradians.

7. A method according to claim 1 or any other preceding claim wherein individual objects comprise a tetragonal shape or a spherical core (22), with a plurality of conical (24) or prismatic projections which extend out from the core.

8. A method according to claim 7 wherein the projections (24) extend out from the core for a distance greater than the core diameter.

9. A method according to claim 1 or any other preceding claim wherein at least some individual objects comprise a hollow shell with apertures giving access to its interior.

10. A method according to claim 9 wherein the hollow shell comprises a plurality of ribs (26) connected together to form at least part of a hollow cage.

11. A method according to claim 1 or any other preceding claim wherein at least some objects have a tetragonal shape, wherein the tetragons are printed using a machine which delivers molten polymer to each required voxel, and are formed from a material which is degradable when immersed in the borehole fluid, wherein the polymer is a degradable polymer being polyhydroxyacetic acid, which degrades over time by hydrolysis.

12. A method according to claim 1 or any other preceding claim wherein at least some individual objects are formed from two or more polymeric materials with different physical and mechanical properties chosen from a range of compositions comprising polyurethane polymers with reactive groups attached, wherein the oligomers are polyurethanes with attached acrylate groups, wherein the polyurethanes are formed from di-isocyanates and polymeric diols, wherein the physical and mechanical properties of the polymers are regulated by the structures, chain lengths and proportions of the di-isocyanates and the polymeric diols and the amount of cross-linking between the polymer chains.

13. A method according to claim 12 wherein at least some objects are tetragons comprising a flexible, photocurable outer material (30), being formed from a polyurethane acrylate containing polymeric diol groups, wherein the outer material (30) is a polymer which is photocured using ultra-violet light during the 3D-printing process, enclosing a deformable core (32) of photocurable inner material in the form of a liquid composition which is curable by means of visible radiation, wherein the inner core material is deposited during the 3D-printing process, wherein the tetragons are added to the borehole fluid, wherein the inner and outer materials are capable of curing to a more rigid state by photocuring, with the inner and outer materials containing different photo-initiators, so that the inner and outer materials are not cured at the same time.

## Patentansprüche

1. Verfahren zum Bereitstellen eines suspendierte Festkörper enthaltenden Bohrlochfluids, umfassend ein Suspendieren der Körper in einem Bohrlochfluid und Abgeben des Bohrlochfluids in ein Bohrloch, **gekennzeichnet durch** Herstellen der Festkörper durch einen additiven Fertigungsprozess in Form eines 3D-Druckprozesses, umfassend ein Verwenden eines beweglichen Druckkopfes zur Abgabe von Tröpfchen einer flüssigen Zusammensetzung an ein Array von Orten in einem als Voxel bezeichneten Arbeitsraum gemäß einem digitalen Design der Festkörper und Verfestigen der Zusammensetzung bei deren Abgabe, wobei die flüssige Zusammensetzung photopolymerisierbar ist und die Polymerisation der Zusammensetzung durch Beleuchtung des Arbeitsraums mit ultraviolettem oder sichtbarem Licht initiiert wird, während der Druckkopf die Tröpfchen der flüssigen Zusammensetzung an die Voxel abgibt, wobei mehrere der Festkörper gleichzeitig hergestellt werden.

2. Verfahren gemäß Anspruch 1, wobei die Körper aus einer Zusammensetzung mit einer relativen Dichte von nicht mehr als 3,0 hergestellt werden, vorzugsweise werden die Körper aus einer Zusammensetzung mit einer relativen Dichte in einem Bereich von 0,8 bis 1,2 hergestellt.

3. Verfahren gemäß Anspruch 2, wobei die Zusammensetzung ein Polymer auf Kohlenstoffbasis umfasst.

4. Verfahren gemäß Anspruch 1 oder einem anderen vorhergehenden Anspruch, wobei die Körper so dimensioniert sind, dass sie zu groß sind, um in eine Sphäre von 1,5 mm Durchmesser zu passen, aber klein genug, um in eine Sphäre mit einem Durchmesser von 6 mm zu passen.

5. Verfahren gemäß Anspruch 1 oder einem anderen vorhergehenden Anspruch, wobei wenigstens einige der Körper eine andere als kugelförmige Form aufweisen.

6. Verfahren gemäß Anspruch 1 oder einem anderen vorhergehenden Anspruch, wobei wenigstens einige der Körper eine derartige Form aufweisen, dass jeder Körper ein oder mehrere Kanten, Spitzen oder Ecken aufweist, wobei vorzugsweise die Spitzen oder Ecken Winkel umfassen, die, in zwei orthogonalen Richtungen gesehen, weniger als 90° betragen, oder die einen Raumwinkel von weniger als 0,5π Steradiant umfassen.

7. Verfahren gemäß Anspruch 1 oder einem anderen vorhergehenden Anspruch, wobei einzelne Körper eine viereckige Form oder einen sphärischen Kern (22) umfassen, mit mehreren konischen (24) oder prismatischen Vorsprüngen, die sich aus dem Kern heraus erstrecken.

8. Verfahren gemäß Anspruch 7, wobei die Vorsprünge (24) sich um einen Abstand aus dem Kern heraus erstrecken, der größer als der Kerndurchmesser ist.

9. Verfahren gemäß Anspruch 1 oder einem anderen vorhergehenden Anspruch, wobei wenigstens einige einzelne Körper einen Hohlmantel mit Öffnungen umfassen, die Zugang zu dessen Inneren bieten.

10. Verfahren gemäß Anspruch 9, wobei der Hohlmantel mehrere Rippen (26) umfasst, die miteinander verbunden sind, um wenigstens einen Teil eines Hohlkäfigs auszubilden.

11. Verfahren gemäß Anspruch 1 oder einem anderen vorhergehenden Anspruch, wobei wenigstens einige Körper eine viereckige Form aufweisen, wobei die Vierecke unter Verwendung einer Maschine gedruckt werden, die geschmolzenes Polymer an jeden benötigten Voxel abgibt, und aus einem Material ausgebildet sind, das abbaubar ist, wenn es in das Bohrlochfluid eingetaucht ist, wobei das Polymer ein abbaubares Polymer ist, bei dem es sich um Polyhydroxyessigsäure handelt, die sich mit der Zeit durch Hydrolyse abbaut.

12. Verfahren gemäß Anspruch 1 oder einem anderen vorhergehenden Anspruch, wobei wenigstens einige einzelne Körper aus zwei oder mehr Polymermaterialien mit unterschiedlichen physikalischen und mechanischen Eigenschaften ausgebildet werden, die aus einem Bereich von Zusammensetzungen umfassend Polyurethan-Polymere mit angelagerten reaktiven Gruppen ausgewählt sind, wobei die Oligomere Polyurethane mit angelagerten Acrylatgruppen sind, wobei die Polyurethane aus Diisocyanaten und polymeren Diolen ausgebildet sind, wobei die physikalischen und mechanischen Eigenschaften der Polymere durch die Strukturen, Kettenlängen und Anteile der Diisocyanate und der polymeren Diole und der Stärke der Vernetzung zwischen den Polymerketten reguliert werden.

13. Verfahren gemäß Anspruch 12, wobei wenigstens einige Körper Vierecke mit einem flexiblen, photohärtbaren Außenmaterial (30) sind, das aus einem polymere Diolgruppen enthaltenden Polyurethanacrylat ausgebildet wird, wobei das Außenmaterial (30) ein Polymer ist, das unter Verwendung von ultraviolettem Licht während des 3D-Druckprozesses photogehärtet wird, die einen verformbaren Kern (32) aus photohärtbarem Innenmaterial in Form einer mittels sichtbarer Strahlung aushärtbaren flüssigen Zusammensetzung umschließen, wobei das Kerninnenmaterial während des 3D-Druckprozesses abgeschieden wird, wobei die Vierecke dem Bohrlochfluid hinzugegeben werden, wobei das Innen- und das Außenmaterial durch Photohärtung in einen starreren Zustand aushärtbar sind, wobei das Innen- und das Außenmaterial verschiedene Photoinitiatoren enthalten, so dass das Innen- und das Außenmaterial nicht zur gleichen Zeit ausgehärtet werden.

## Revendications

1. Procédé de fourniture d'un fluide de trou de forage contenant des objets solides en suspension, comprenant la mise en suspension des objets dans un fluide de forage et la distribution du fluide de forage dans un trou de forage, **caractérisé par** la fabrication des objets solides au moyen d'un processus fabrication additive sous la forme d'un processus d'impression 3D, comprenant l'utilisation d'une tête d'impression mobile pour délivrer des gouttelettes d'une composition liquide à un réseau d'emplacements dans un espace de travail appelé voxels, conformément à une conception numérique des objets solides, et à solidifier la composition lorsqu'elle est délivrée, dans lequel la composition liquide est photopolymérisable et la polymérisation de la composition est initiée par l'illumination de l'espace de travail avec une lumière ultraviolette ou visible tandis que la tête d'impression délivre les gouttelettes de la composition liquide aux voxels, un certain nombre d'objets solides étant réalisés simultanément.

2. Procédé selon la revendication 1, dans lequel les objets sont faits d'une composition ayant une densité ne dépassant pas 3,0 et de préférence, les objets sont constitués d'une composition ayant une densité comprise dans une plage de 0,8 à 1,2.

3. Procédé selon la revendication 2, dans lequel la composition comprend un polymère à base de carbone.

4. Procédé selon la revendication 1 ou toute autre revendication précédente, dans lequel les objets sont dimensionnés de manière à être trop grands pour se loger à l'intérieur d'une sphère de 1,5 mm de diamètre mais suffisamment petits pour se loger à l'intérieur d'une sphère de 6 mm de diamètre.

5. Procédé selon la revendication 1 ou toute autre revendication précédente, dans lequel au moins certains des objets ont une forme autre que sphérique.

6. Procédé selon la revendication 1 ou toute autre revendication précédente, dans lequel au moins certains des objets ont une forme telle que chaque objet a un ou plusieurs bords, pointes ou coins ; de préférence les pointes ou coins comprennent des angles qui sont inférieurs à 90° vus dans deux directions orthogonales ou qui comprennent un angle solide inférieur à 0,5π stéradians.

7. Procédé selon la revendication 1 ou toute autre revendication précédente, dans lequel des objets individuels comportent une forme tétragonale ou un noyau sphérique (22), avec une pluralité de saillies coniques (24) ou prismatiques qui dépassent du noyau.

8. Procédé selon la revendication 7, dans lequel les saillies (24) dépassent du noyau sur une distance supérieure au diamètre du noyau.

9. Procédé selon la revendication 1 ou toute autre revendication précédente, dans lequel au moins certains objets individuels comprennent une coque creuse avec des ouvertures donnant accès à son intérieur.

10. Procédé selon la revendication 9, dans lequel la coque creuse comprend une pluralité de nervures (26) reliées entre elles pour former au moins une partie d'une cage creuse.

11. Procédé selon la revendication 1 ou toute autre revendication précédente, dans lequel au moins certains objets ont une forme tétragonale, dans lequel les tétragones sont imprimés à l'aide d'une machine qui délivre un polymère fondu à chaque voxel requis, et sont formés à partir d'un matériau qui est dégradable lorsqu'il est immergé dans le fluide de forage, le polymère étant un polymère dégradable qui est un acide polyhydroxyacétique, qui se dégrade au cours du temps par hydrolyse.

12. Procédé selon la revendication 1 ou toute autre revendication précédente, dans lequel au moins certains objets individuels sont formés à partir de deux matériaux polymères ou plus ayant des propriétés physiques et mécaniques différentes, choisis dans une gamme de compositions comprenant des polymères de polyuréthane à groupes réactifs attachés, les oligomères étant des polyuréthanes à groupes acrylate attachés, les polyuréthanes étant formés à partir de di-isocyanates et de diols polymères, les propriétés physiques et mécaniques des polymères étant régulées par les structures, les longueurs de chaîne et les proportions des di-isocyanates et des diols polymères et la quantité de réticulation entre les chaînes polymères.

13. Procédé selon la revendication 12, dans lequel au moins certains objets sont des tétragones comprenant un matériau externe souple photodurcissable (30), étant formé à partir d'un polyuréthane-acrylate contenant des groupes diol polymère, le matériau externe (30) est un polymère qui est photodurci à l'aide d'une lumière ultraviolette pendant le processus d'impression 3D, enfermant un noyau déformable (32) de matériau interne photodurcissable sous la forme d'une composition liquide qui est durcissable au moyen d'un rayonnement visible, le matériau de noyau interne étant déposé pendant le processus d'impression 3D, les tétragones étant ajoutés au fluide de forage, les matériaux interne et externe étant aptes à durcir à un état plus rigide par photopolymérisation, les matériaux interne et externe contenant différents photo-initiateurs, de sorte que les matériaux interne et externe ne sont pas durcis en même temps.
